# EUROPEAN PATENT SPECIFICATION

(11) **EP 4 406 924 B1**
(45) Date of publication and mention of the grant of the patent: **08.04.2026**
(21) Application number: 22869469.1
(22) Date of filing: 14.07.2022
(51) Int. Cl.: C04B 26/04, C04B 26/14, C04B 26/16, C04B 26/18, A47K 3/02, E03C 1/14

(54) **COMPOSITE CONSTRUCTION MATERIAL COMPRISING A THERMOSETTING RESIN AND A POROUS LOAD**
VERBUNDBAUMATERIAL MIT EINEM WÄRMEHÄRTBAREN HARZ UND EINER PORÖSEN LADUNG
MATÉRIAU COMPOSITE DE CONSTRUCTION COMPRENANT UNE RÉSINE THERMOSTABLE ET UNE CHARGE POREUSE

(30) Priority: 20.09.2021 ES 202130912
(43) Date of publication of application: 31.07.2024
(73) Proprietor: Clades Composites, S.L., 46940 Manises Valencia (ES)
(72) Inventor: NAVARRO GUIJARRO, Juan Francisco, 46940 Manises (Valencia) (ES); HUELAMO JAREÑO, José Pedro, 46940 Manises (Valencia) (ES)
(74) Representative: Temiño Ceniceros, Ignacio
(86) International application number: PCT/ES2022/070456
(87) International publication number: WO 2023/041818

(56) References cited:
- CN-A- 1 056 296
- CN-A- 1 215 035
- CN-A- 101 831 160
- CN-A- 110 015 865
- CN-A- 111 058 567
- CN-U- 202 136 232
- CN-U- 202 136 232
- DE-A1- 102012 113 000
- LT-B- 3 860
- US-A- 3 408 316
- US-A- 4 730 012
- RAJI MARYA, NEKHLAOUI SOUAD, EL HASSANI IZ-EDDINE EL AMRANI, ESSASSI EL MOKHTAR, ESSABIR HAMID, RODRIGUE DENIS, BOUHFID RACHID, QA: "Utilization of volcanic amorphous aluminosilicate rocks (perlite) as alternative materials in lightweight composites", COMPOSITES PART B, ELSEVIER, AMSTERDAM, NL, vol. 165, 1 May 2019 (2019-05-01), AMSTERDAM, NL, pages 47 - 54, XP093050021, ISSN: 1359-8368, DOI: 10.1016/j.compositesb.2018.11.098

## Description

### Field of the invention

The present invention relates to a composite construction material that has the particular feature of comprising in its structure a porous filler material, such as pearlite, vermiculite, pumice, sepiolite and/or zeolite, together with a thermostable resin. This material can be used for different applications, among others: manufacturing sanitary equipment such as shower trays, sinks or countertops, and can be used as polymer concrete in general.

This invention falls within the different types of construction materials or materials for constructive and/or architectural use, and specifically it is included within composite materials comprising a thermostable resin in the composition thereof.

The present invention makes it possible to obtain a lighter composite material than those commonly used today and with features that allow the physical and mechanical, as well as aesthetic, requirements of the final products to be manufactured to be achieved, in addition to improving the acoustic and thermal insulation properties of materials with a similar use.

### State of the art of the invention

The existence of various types of materials comprising at least one thermostable resin in their structure is known. Currently, mineral fillers used in thermostable matrix polymer materials lead to products with a very high weight, with densities between 1,800-2,300 kg/m3, which complicates handling thereof and increases transportation costs and, consequently, their carbon footprint. In addition, the high weight limits the size and shape of certain pieces to be manufactured or built by complicating the anchoring and handling thereof.

The existence of other light materials is known, which are obtained from hollow glass or ceramic microspheres or expanded synthetic minerals that improve the density problem, but these obtained products significantly increase the cost, which determines that, despite the advantages they may bring, the use thereof is not high, or even competitive, compared to standard higher density materials.

The present invention is based on including in a composite material with thermostable resins, a given amount of porous filler material in its natural state, i.e., raw or also called unexpanded, such as pearlite, vermiculite, pumice, sepiolite or zeolite, which is known to have very specific particular characteristics, which are for example, they are light materials; they are materials of natural origin without high manufacturing costs and environmentally friendly with low CO₂ emissions; they are fire resistant materials; but they have the drawback that by themselves they have physical and mechanical characteristics that are not sufficient to be used as construction materials.

In this regard, as previously indicated, documents are known that disclose the use of materials comprising a porous filler part.

The disclosure in document DE2726751A1 is known, where a decorative panel typology is described that at its core has a layer comprising, among others, a thermostable resin and expanded vermiculite, but while these panels are very light, they do not have resistive capacity and are used to be inserted into a frame. Furthermore, this document relates to a material with high mineral loads processed with heat treatment, leading to a product with a high carbon footprint and high production costs.

The disclosure in documents CN101798195A and KR20120035628A is also known, where different types of materials are described that comprise a thermostable resin and porous fillers such as perlite in one case and vermiculite in the other case, where the use is intended to be an insulating or fire retardant material, without resistive capacity to be used alone as a material for constructive use, and as in the previous case, where the material is processed at high temperatures, resulting in a high carbon footprint and high production costs.

The use of coatings to improve the processability of materials is also not common. In this regard, the disclosure in document KR100835132B1 is known, where the use of a finishing material that is used for fixing boards and also for finishing corners is described, which among its components comprises a thermostable resin and also vermiculite. In this case, this product is not applicable to constructive use either.

Known from CN 110 015 865 A is a material for making artificial granite comprising unsaturated polyester resin, filler being a combination of hard filler (listed i.a. perlite) and soft filler (listed i.a. CaCO3, ATH), improver/modifier (listed i.a. colour paste), curing agent and curing accelerator.

Taking into account all the arguments previously presented, it is considered that it is necessary to develop a composite material that, being light, can have sufficient resistant characteristics to be used for constructive use, since the currently known composite materials that comprise a thermostable resin and a porous filler, are either very light and have a limited use for decoration and/or insulation, or do not meet the physical and mechanical requirements to be used for construction; or they are very heavy, and this makes them unable to compete with conventional materials. Furthermore, as the present material is not based on mineral fillers processed with heat treatments, but on a product composed of unexpanded natural elements, it allows the development of a product with a lower carbon footprint and a lower production cost compared to those known and indicated previously. At this point it should be noted that the known prior art is based on expanded mineral fillers, i.e., artificial products generally treated at high temperatures; while in the present invention unexpanded mineral fillers are used, i.e., raw or dehydrated fillers in their natural state, where these loads have not been subjected to heat treatments.

Taking into account the prior art known in the state of the art, the material object of the present invention differs from any other known in the state of the art, and allows a lower density to be obtained compared to currently known materials; and in turn, it comprises resistant values suitable for use in construction, and improve the thermal and acoustic resistance values of other conventional materials used to date. This resolves the technical problems described above, and that this material can have a constructive use.

### Description of the invention

The first object of the present invention is to define the composition of a new composite material that significantly improves composites based on thermostable resins, allowing a material to be obtained that is both light and resistant that can be used for constructive use.

In this regard, the construction material object of the present invention, is a material that comprises, among others, a thermostable resin and a porous filler, and which has the particularity of comprising a composition in % by weight, comprising:
20 - 40% thermosetting resin;
15 - 70% porous filler material, wherein the porous filler material is at least one selected from pearlite, vermiculite, pumice, sepiolite and zeolite;
10 - 50% mineral filler material, wherein the mineral filler material is at least one selected from carbonates, dolomite and aluminium hydroxide;
0.5 - 4% of a pigment; and
0.1 - 3% of a catalyst.

Going into detail regarding this composition, it must be taken into account that the average particle size of the porous filler material must be comprised between 0.1 and 10 mm; while the average particle size of the mineral filler material must be comprised between 5 microns and 1 cm.

In the mineral filler, which, as mentioned in the previous section, is a raw or unexpanded filler, among the carbonates, carbonates in general can be used, although calcium carbonates, of sodium or magnesium, among others, are of note.

This material, as indicated above, is a composite material that comprises a part of thermostable resin, wherein this thermostable resin is at least one selected from polyester, vinyl ester, epoxy resin and polyurethane.

The pigment preferably used for this material is titanium dioxide, which gives a whitish colouration; although another type of pigment can be used depending on the possible final use of the final product. Among these other possible pigments, carbon black, iron oxides or combinations thereof are of note, with which it is possible to obtain shades such as green, blue, red or yellow, among others.

Moreover, the catalyst used in what can be considered a preferred embodiment of the invention is methyl ethyl ketone peroxide, although any other type of catalyst with similar characteristics can be used.

This composition allows densities to be obtained that are below the usual 1,800-2,300 kg/m³ known in composite materials for constructive use that comprise thermostable resins, reaching densities of up to 2,400 kg/m in polymer concretes³. In this case, densities are less than 1600 kg/m³, being able to reach around 1050 kg/m³ depending on the final dosage and the total proportion of porous filler. In this case, resistance results are suitable for constructive use, being in the order of 20 - 40 MPa, therefore, a resistant product that is lighter is obtained, which provides a solution to the problems derived from transportation, handling and installation of products with a density as previously indicated.

Similarly, this material allows us to obtain improved values in terms of acoustic and thermal insulation compared to others used for construction uses. As will be seen later, the material object of the present invention, for a product with a thickness of 50 mm and a density of 1447 kg/m³, has thermal resistance results of between 0.170 - 0.187 m² K/W and acoustic resistance of 18.7 dB; compared to 0.104 - 0.125 m² K/W thermal resistance and 17.1 dB acoustic resistance of a conventional polymer construction material that has the same thickness and density of 2220 kg/m³; therefore, this new lighter composition also allows better thermal and acoustic resistance results to be obtained.

To obtain a constructive product based on this composition, all the components are mixed homogeneously, and then the catalyst is incorporated into said mixture. In this way, a uniform dough is achieved, followed by the filling of a mould, the one corresponding to the shape and size intended for the piece to be obtained. Depending on the polymer, curing can be carried out in different systems: at room temperature, high temperatures, using microwaves. Depending on the final characteristics of the piece, the process may require a vacuum to extract the air generated in the mixing and/or vibration. Once cured, the material can be conveniently removed from the mould. Depending on the resin and curing conditions, it may require a post-curing process. This piece can be ready for use, pending external components, varnishing, painting or others, when appropriate. In this regard, the application of paint can also initially be done on the mould, the casting being performed over said paint, previously fixed to the mould. In this case, the paint must be compatible with the thermostable resin and be able to fuse with the casting material during the reaction of the latter.

In any case, it can be said that the method for obtaining a construction material the previously defined composition, it comprises the steps of:
i) homogeneously mixing the thermostable resin, the porous filler material and the mineral filler material in a stirring system;
ii) introducing the pigment to the mixture of the previous step and mixing in the stirring system;
iii) outlet of the homogeneous mixture resulting from the previous step and filling a mould;
iv) introducing the catalyst into the mixture filled in the mould of the previous step, and homogeneously mixing;
v) curing the mixture resulting from the previous step for a period of 10 to 60 minutes and at a temperature of at least 45°C;
vi) obtaining the final product;
and after the step of obtaining the final product, it can be demoulded and can be subjected to a surface finish selected from varnishing, polishing, glazing and/or painting.

Taking into account that which was previously described, an object of the present invention is to define the possible use of a material according to the characteristics and composition previously defined for the manufacture of polymer concrete. Similarly, the use of a material can also be indicated according to the characteristics and composition previously defined for manufacturing sanitary products such as shower trays, sinks or countertops. As previously indicated, the material is light, resistant and with very good heat and noise insulating characteristics.

It must be taken into account that, throughout the description and claims, the term "comprises" and its variants are not intended to exclude other technical features or additional elements.

### Detailed description of embodiments of the invention

Next, a detailed description is provided of different exemplary embodiments of a composite material such as the one previously described, and which allows it to be used as a constructive material.

A first possible embodiment of the invention consists of a material that has the particularity of comprising the following composition (in % by weight):
27% thermostable resin which is an unsaturated polyester resin,
34.50% porous filler material which is perlite; with a particle size between 0.5 mm and 1.50 mm, and that can be treated with a coating or exterior protection treatment;
34.50% mineral filler material, wherein the mineral filler material is calcium carbonate, with a particle size between 0.1 mm and 1 mm; such that the ratio between porous filler and mineral filler is 1:1, the mineral filler being raw or unexpanded,
2% of a pigment that is titanium dioxide to obtain a white product; and
2% of a catalyst, which is methyl ethyl ketone peroxide.

This material is obtained by means of an initial homogeneous mixing between the porous filler material and the mineral filler material in a stirring system; the subsequent introduction of the pigment to the mixture of the previous step and mixing in the agitator system; the outlet of the homogeneous mixture resulting from the previous step and filling of a mould; the introduction of the catalyst into the mixture filled in the mould of the previous step, and mixing homogeneously; a curing of the mixture resulting from the previous step for a period of 50 minutes; the final product is obtained; and subsequently, it can be demoulded and lastly, it undergoes a surface finish consisting of polishing.

This material results in a density of 1447 kg/m³ and a resistance around 30 MPa, which allows it to be used for manufacturing sanitary products, such as a sink or a shower tray, given that even aesthetically it is a product with a white finish common in products this type.

At this point, the exemplary embodiment is compared with a conventional product based on polymer resin commonly used for manufacturing sanitary products, specifically shower trays. This material is made up of 75% resin and 25% mineral filler material. This material has a density of 2220 Kg/m³, and has mechanical characteristics similar to those of the previously indicated exemplary embodiment.

It can be seen that the material object of the present invention has mechanical characteristics suitable for use in sanitary products, but it has the great advantage of being a less dense material, which allows the problems existing in known polymer materials regarding their transport and use to be solved.

Next, comparative tests are carried out on both materials for pieces that have a similar thickness, specifically between 47 and 52 mm.

Table 1 shows the results obtained for the determination of thermal conductivity, according to UNE-EN 12667, between a material according to an exemplary embodiment of the present invention (inventive material) and the known material indicated previously (conventional material), wherein the measurement conditions in the tests are in ambient conditions of 23°C and 60% RH, and the average temperature determination between the hot and cold plate is 20°C.

**Table 1**

| | Conventional material | | **Invention material** | |
|---|---|---|---|---|
| T (°C) | Thermal conductivity (W/m K) | Thermal resistance (m² K/W) | Thermal conductivity (W/m K) | Thermal resistance (m² K/W) |
| 10 | 0.453 | 0.125 | 0.302 | **0.187** |
| 20 | 0.483 | 0.117 | 0.312 | **0.182** |
| 30 | 0.511 | 0.111 | 0.319 | **0.177** |
| 40 | 0.542 | 0.104 | 0.331 | **0.170** |

This shows that the material that is the object of the present invention has a thermal resistance characteristic that is significantly higher than that of current polymer materials.

Table 2 shows the results obtained for determining the thermal insulation between a material according to an exemplary embodiment of the present invention (inventive material) and the known material indicated previously (conventional material), wherein for the calculation of global acoustic insulation (D_{global}) the average of all the specific acoustic insulation of each of the different study frequencies is calculated, such that a value is obtained for each material that allows its comparison, and such that the greater the overall acoustic insulation value of a material, the greater the acoustic insulation and/or noise absorption it has.

**Table 2**

| | D (dB) | | | | | | **D_{global} (dB)** |
|---|---|---|---|---|---|---|---|
| | 250 Hz | 500 Hz | 1000 Hz | 2000 Hz | 4000 Hz | 8000 Hz | |
| Conventional material | 19.4 | 17.1 | 17.0 | 16.2 | 16.5 | 16.6 | 17.1 |
| **Invention material** | 20.7 | 18.6 | 18.6 | 17.8 | 18.0 | 18.2 | **18.7** |

This shows that the material object of the present invention has an acoustic insulation characteristic higher than current polymer materials, which is very important for example to reduce noise in shower trays, or for insulation of a room, as can be compared to polymer concrete.

Therefore, it can be seen that a possible embodiment of the material of the invention, specifically 27% unsaturated polyester resin, 34.50% porous filler material which is perlite; 34.50% mineral filler material which is calcium carbonate; 2% of a pigment that is titanium dioxide; and 2% of a catalyst which is methyl ethyl ketone peroxide; compared to a conventional polymer material, enables a much lighter material to be obtained, with similar resistant characteristics, and significantly improves its thermal resistance capacity and acoustic insulation.

In other possible embodiments of the invention it has been seen that for dosages with 25 - 35% thermostable resin; 30 - 40% porous filler material, wherein the porous filler material is at least one selected from pearlite, vermiculite, pumice, sepiolite and zeolite; 30 - 40% mineral filler material, wherein the mineral filler material is at least one selected from calcium carbonate and dolomite; 0.5 - 4% of a pigment; and 0.1 - 3% of a catalyst, the density obtained is between 1300 - 1600 Kg/m3, with resistance results of around 36 MPa depending on the porous and mineral material, being suitable for use as a polymer concrete or in the execution of sanitary products.

In other possible embodiments of the invention it has been seen that for dosages with 25 - 35% thermostable resin; 45 - 60% porous filler material, wherein the porous filler material is at least one selected from pearlite, vermiculite, pumice, sepiolite and zeolite; 10 - 25% mineral filler material, wherein the mineral filler material is at least one selected from calcium carbonate and dolomite; 0.5 - 4% of a pigment; and 0.1 - 3% of a catalyst, the density obtained is between 1050 - 1300 Kg/m3, with resistance results of around 29 MPa depending on the porous and mineral material, and therefore, being suitable for use as a polymer concrete or in the execution of sanitary products.

It can also be observed that the more the proportion of porous filler is increased and the more the mineral material is reduced, the density decreases, although it is important that the material has a minimum proportion of mineral filler to have resistant characteristics suitable for the uses described previously.

Taking into account all the previous aspects, the present invention solves the problems of being able to have a product that is lighter and much more manageable and transportable than the polymer materials known to date, wherein this new material allows the resistive and aesthetic requirements to be achieved, which are necessary to be able to manufacture sanitary products and/or be used as polymer concrete, and wherein additionally, the acoustic and thermal insulation properties of materials with a similar use are improved.

## Claims

1. A composite construction material comprising a thermostable resin and a porous filler, which is **characterised in that** it has a composition in % by weight comprising 20 - 40% thermostable resin; 15 - 70% porous filler material, wherein the porous filler material is at least one selected from pearlite, vermiculite, pumice, sepiolite and zeolite; 10 - 50% mineral filler material, wherein the mineral filler material is at least one selected from carbonate, dolomite and aluminium hydroxide; 0.5 - 4% of a pigment; and 0.1 - 3% of a catalyst.

2. The material according to the features of claim 1, wherein the average particle size of the porous filler material is between 0.1 and 10 mm.

3. The material according to the features of claim 1, wherein the average particle size of the mineral filler material is between 5 microns and 1 cm.

4. The material according to the features of claim 1, wherein the mineral filler is raw.

5. The material according to the features of claim 1, wherein the thermostable resin is at least one selected from polyester, vinyl ester, epoxy resin and polyurethane.

6. The material according to the features of claim 1, wherein the pigment is at least one selected from titanium dioxide, carbon black or iron oxides.

7. The material according to the features of claim 1, wherein the catalyst is methyl ethyl ketone peroxide.

8. A method for obtaining a composite material according to any of the preceding claims, comprising the steps of:
i) homogeneously mixing the thermostable resin, the porous filler material and the mineral filler material in a stirring system;
ii) introducing the pigment to the mixture of the previous step and mixing in the stirring system;
iii) outlet of the homogeneous mixture resulting from the previous step and filling a mould;
iv) introducing the catalyst into the mixture filled in the mould of the previous step, and homogeneously mixing;
v) curing the mixture resulting from the previous step for a period of 10 to 60 minutes, and at a temperature of at least 45°C;
vi) obtaining the final product.

9. The method according to the preceding claim wherein, after the step of obtaining the final product, it is demoulded and subjected to a surface finish selected from varnishing, polishing, glazing and/or painting.

10. A use of a material according to any one of claims 1 - 7, such as a polymer concrete.

11. The use of a material according to any one of claims 1 - 7 for manufacturing sanitary products.

## Patentansprüche

1. Verbundbaumaterial, umfassend ein thermostabiles Harz und einen porösen Füllstoff, das **dadurch gekennzeichnet ist, dass** es eine Zusammensetzung in Gew.-% aufweist, umfassend 20 - 40 % thermostabiles Harz; 15 - 70 % poröses Füllmaterial, wobei das poröse Füllmaterial mindestens eines ist, ausgewählt aus Perlit, Vermiculit, Bimsstein, Sepiolith und Zeolith; 10 - 50 % mineralisches Füllmaterial, wobei das mineralische Füllmaterial mindestens eines ist, das aus Carbonat, Dolomit und Aluminiumhydroxid ausgewählt ist; 0,5 - 4 % eines Pigments; und 0,1 - 3 % eines Katalysators.

2. Material gemäß den Merkmalen nach Anspruch 1, wobei die durchschnittliche Partikelgröße des porösen Füllstoffmaterials zwischen 0,1 und 10 mm liegt.

3. Material gemäß den Merkmalen nach Anspruch 1, wobei die durchschnittliche Partikelgröße des mineralischen Füllstoffmaterials zwischen 5 Mikrometern und 1 cm liegt.

4. Material gemäß den Merkmalen nach Anspruch 1, wobei der mineralische Füllstoff roh ist.

5. Material gemäß den Merkmalen nach Anspruch 1, wobei das thermostabile Harz mindestens eines ist, ausgewählt aus Polyester, Vinylester, Epoxidharz und Polyurethan.

6. Material gemäß den Merkmalen nach Anspruch 1, wobei das Pigment mindestens eines ist, das aus Titandioxid, Ruß oder Eisenoxiden ausgewählt ist.

7. Material gemäß den Merkmalen nach Anspruch 1, wobei der Katalysator Methylethylketonperoxid ist.

8. Verfahren zum Erhalten eines Verbundmaterials nach einem der vorhergehenden Ansprüche, umfassend die folgenden Schritte:
i) homogenes Mischen des thermostabilen Harzes, des porösen Füllstoffmaterials und des mineralischen Füllstoffmaterials in einem Rührsystem;
ii) Eingeben des Pigments zu dem Gemisch aus dem vorherigen Schritt und Mischen in dem Rührsystem;
iii) Ausbringen des aus dem vorherigen Schritt resultierenden homogenen Gemisches und Füllen einer Form;
iv) Eingeben des Katalysators zu dem Gemisch, das in die Form des vorherigen Schritts gefüllt wurde, und homogenes Mischen;
v) Aushärten des aus dem vorherigen Schritt resultierenden Gemisches für einen Zeitraum von 10 bis 60 Minuten und bei einer Temperatur von mindestens 45 °C;
vi) Erhalten des Endprodukts.

9. Verfahren nach dem vorhergehenden Anspruch, wobei nach dem Schritt des Erhaltens des Endprodukts dieses entformt und einer Oberflächenveredelung unterzogen wird, die aus Lackieren, Polieren, Glasieren und/oder Bemalen ausgewählt wird.

10. Verwendung eines Materials nach einem der Ansprüche 1 - 7, wie etwa eines Polymerbetons.

11. Verwendung eines Materials nach einem der Ansprüche 1 - 7 zur Fertigung von Sanitärprodukten.

## Revendications

1. Matériau composite de construction comprenant une résine thermostable et une charge poreuse, qui est **caractérisé en ce qu'**il a une composition en % en poids comprenant 20 à 40 % de résine thermostable ; 15 à 70 % de matière de charge poreuse, dans lequel la matière de charge poreuse est au moins une choisie parmi la perlite, la vermiculite, la pierre ponce, la sépiolite et la zéolite ; 10 à 50 % de matière de charge minérale, dans lequel la matière de charge minérale est au moins une choisie parmi le carbonate, la dolomite et l'hydroxyde d'aluminium ; 0,5 à 4 % d'un pigment ; et de 0,1 à 3 % d'un catalyseur.

2. Matériau selon les caractéristiques de la revendication 1, dans lequel la taille moyenne des particules de la matière de charge poreuse est comprise entre 0,1 et 10 mm.

3. Matériau selon les caractéristiques de la revendication 1, dans lequel la taille moyenne des particules de la matière de charge minérale est comprise entre 5 microns et 1 cm.

4. Matériau selon les caractéristiques de la revendication 1, dans lequel la charge minérale est brute.

5. Matériau selon les caractéristiques de la revendication 1, dans lequel la résine thermostable est au moins une choisie parmi le polyester, le vinylester, la résine époxy et le polyuréthane.

6. Matériau selon les caractéristiques de la revendication 1, dans lequel le pigment est au moins un choisi parmi le dioxyde de titane, le noir de carbone ou les oxydes de fer.

7. Matériau selon les caractéristiques de la revendication 1, dans lequel le catalyseur est le peroxyde de méthyléthylcétone.

8. Procédé d'obtention d'un matériau composite selon l'une quelconque des revendications précédentes, comprenant les étapes consistant à :
i) le mélange homogène de la résine thermostable, la matière de charge poreuse et la matière de charge minéral dans un système d'agitation ;
ii) l'introduction du pigment dans le mélange de l'étape précédente et le mélange dans le système d'agitation ;
iii) la sortie du mélange homogène résultant de l'étape précédente et le remplissage d'un moule ;
iv) l'introduction du catalyseur dans le mélange remplit dans le moule à l'étape précédente et le mélange homogène ;
v) le durcissement du mélange résultant de l'étape précédente pendant une période de 10 à 60 minutes et à une température d'au moins 45 °C ;
vi) l'obtention du produit final.

9. Procédé selon la revendication précédente dans lequel, après l'étape d'obtention du produit final, il est démoulé et soumis à une finition de surface choisie parmi le vernis, le polissage, le vitrage et/ou la peinture.

10. Utilisation d'un matériau selon l'une quelconque des revendications 1 à 7, comme un béton polymère.

11. Utilisation d'un matériau selon l'une quelconque des revendications 1 à 7 pour la fabrication de produits sanitaires.
